# EUROPEAN PATENT APPLICATION

(11) **EP 4 583 348 A1**
(43) Date of publication of application: **09.07.2025**
(21) Application number: 24197848.5
(22) Date of filing: 02.09.2024
(51) Int. Cl.: H02J 3/32, H02J 7/35, H02S 40/30, H02S 40/32

(54) **CONTROL METHOD AND CONTROL DEVICE OF PHOTOVOLTAIC SYSTEM**

(30) Priority: 04.01.2024 CN 202410009550
(71) Applicant: Wanbang Digital Energy Co., Ltd., Changzhou, Jiangsu 213100 (CN); Jiangsu Wanbang Energy Storage Technology Co., Ltd., Yancheng Jiangsu (CN)
(72) Inventor: Zhu, Xuancai, Changzhou, Jiangsu (CN); Fan, Deyu, Changzhou, Jiangsu (CN); Huang, Xiang, Changzhou, Jiangsu (CN)
(74) Representative: Kurig, Thomas

(57) **Abstract**

The disclosure relates to the field of new energy technology and provides a control method and a control device of a photovoltaic system. The photovoltaic system includes a photovoltaic string (20), an energy storage device (30), a photovoltaic inverter (40), and a power converter (10). The method includes: obtaining a current time and an state of charge (SOC) of the energy storage device (30); checking whether the current time is in a preset charging period of the energy storage device (30), and checking whether the SOC of the energy storage device (30) meets a charging condition to control the power converter (10); checking whether the current time is in a preset discharging period of the energy storage device (30), and checking whether the SOC of the energy storage device (30) meets a discharging condition to control the power converter (10). The disclosure can directly implement the charging/discharging control of the energy storage device (30) without the need for a related apparatus to sample or communicate with a grid-connected end of the photovoltaic system, which is low in cost and simple in control. Moreover, since there is no information exchange with another apparatus, a third-party photovoltaic inverter apparatus can be better matched, and compatibility is strong.

## Description

### Technical Field

The disclosure relates to the field of new energy technology, and in particular to a control method of a photovoltaic system, a control device of a photovoltaic system, and a non-transitory computer-readable storage medium.

### Description of Related Art

At present, the control scheme of the photovoltaic system needs to know the photovoltaic generating power and the grid-connected power of the photovoltaic inverter in order to control the charging/discharging of the energy storage device in the photovoltaic system, which often requires adding an additional sampling device or photovoltaic inverter at the grid-connected end to communicate and obtain corresponding data.

The above manner requires the additional sampling apparatus, which has the issues of high cost and increased complexity of the architecture of the photovoltaic system. Also, the control of the entire system is complicated, a photovoltaic inverter communication protocol is required to provide corresponding parameters, the system is not easily compatible with a third-party photovoltaic inverter, compatibility is poor, and adaptability is limited.

### SUMMARY

The disclosure is targeted at solving the above technical issues. A first objective of the disclosure is to provide a control method of a photovoltaic system.

A second object of the disclosure is to provide a control device of a photovoltaic system.

Technical solutions adopted by the disclosure are as follows.

An embodiment of a first aspect of the disclosure provides a control method of a photovoltaic system. The photovoltaic system includes a photovoltaic string, an energy storage device, a photovoltaic inverter, and a power converter connected to the photovoltaic string, the energy storage device, and the photovoltaic inverter. The power converter includes a switching network and a bidirectional power converter. The method includes the following steps: obtaining the current time and the state of charge (SOC) of the energy storage device; checking whether the current time is in a preset charging period of the energy storage device, and checking whether the SOC of the energy storage device meets the charging condition, generating a first check result, and controlling the bidirectional power converter, the switching network, and the energy storage device according to the first check result; checking whether the current time is in a preset discharging period of the energy storage device, and checking whether the SOC of the energy storage device meets the discharging condition, generating a second check result, and controlling the bidirectional power converter, the switching network, and the energy storage device according to the second check result.

The control method of the photovoltaic system provided by the disclosure may also have the following additional technical features.

According to an embodiment of the disclosure, controlling the power converter and the energy storage device according to the first check result specifically includes: when the current time is in the preset charging period of the energy storage device and the SOC of the energy storage device does not meet the charging condition, controlling the bidirectional power converter to maintain an off state through controlling the switching network to disconnect a charging loop of the energy storage device, and outputting a power by the photovoltaic string through the photovoltaic inverter; when the current time is in the preset charging period of the energy storage device and the SOC of the energy storage device meets the charging condition, controlling the bidirectional power converter to perform maximum power point tracking (MPPT) on the photovoltaic string according to a preset adaptive disturbance frequency, while controlling the bidirectional power converter to output a charging power to the energy storage device according to a preset charging strategy.

According to an embodiment of the disclosure, controlling the bidirectional power converter, the switching network, and the energy storage device according to the first check result further includes sending a differential power between a generating power of the photovoltaic string and the charging power output to the energy storage device by the bidirectional power converter to the photovoltaic inverter.

According to an embodiment of the disclosure, controlling the bidirectional power converter, the switching network, and the energy storage device according to the second check result specifically includes: when the current time is in the preset discharging period of the energy storage device and the SOC of the energy storage device does not meet the discharging condition, disconnecting a discharging loop of the energy storage device through controlling the switching network according to a discharging strategy of the bidirectional power converter; when the current time is in the preset discharging period of the energy storage device and the SOC of the energy storage device meets the discharging condition, controlling the bidirectional power converter to simulate power generating characteristics of the photovoltaic string, and outputting a power through the photovoltaic inverter according to the discharging strategy of the energy storage device.

According to an embodiment of the disclosure, the switching network includes a diode, a first switch, and a second switch. An anode of the diode is connected to a first output terminal of the photovoltaic string. One end of the first switch is connected to a cathode of the diode and a first input terminal of the photovoltaic inverter, and other end of the first switch is connected to a first input terminal of the bidirectional power converter. One end of the second switch is connected to a second output terminal of the photovoltaic string and a second input terminal of the photovoltaic inverter, and other end of the second switch is connected to a second input terminal of the bidirectional power converter.

An embodiment of a second aspect of the disclosure provides a control device of a photovoltaic system. The photovoltaic system includes a photovoltaic string, an energy storage device, a photovoltaic inverter, and a power converter connected to the photovoltaic string, the energy storage device, and the photovoltaic inverter. The power converter includes a switching network and a bidirectional power converter. The device includes: an acquisition module, a first check module, and a second check module. The acquisition module is used to obtain the current time and the SOC of the energy storage device. The first check module is used to determine whether the current time is in a preset charging period of the energy storage device, and determine whether the SOC of the energy storage device meets the charging condition, generate a first check result, and control the bidirectional power converter, the switching network, and the energy storage device according to the first check result. The second check module is used to determine whether the current time is in a preset discharging period of the energy storage device, and determine whether the SOC of the energy storage device meets the discharging condition, generate a second check result, and control the bidirectional power converter, the switching network, and the energy storage device according to the second check result.

The control device of the photovoltaic system provided by the disclosure may also have the following additional technical features.

According to an embodiment of the disclosure, the first check module is specifically used to: when the current time is in the preset charging period of the energy storage device and the SOC of the energy storage device does not meet the charging condition, control the bidirectional power converter to maintain an off state through controlling the switching network to disconnect a charging loop of the energy storage device, and output a power by the photovoltaic string through the photovoltaic inverter; when the current time is in the preset charging period of the energy storage device and the SOC of the energy storage device meets the charging condition, control the bidirectional power converter to perform MPPT on the photovoltaic string according to a preset adaptive disturbance frequency, while controlling the bidirectional power converter to output a charging power to the energy storage device according to a preset charging strategy.

According to an embodiment of the disclosure, the first check module is further used to send a differential power between a generating power of the photovoltaic string and the charging power output to the energy storage device by the bidirectional power converter to the photovoltaic inverter.

According to an embodiment of the disclosure, the second check module is specifically used to: when the current time is in the preset discharging period of the energy storage device and the SOC of the energy storage device does not meet the discharging condition, disconnect a discharging loop of the energy storage device through controlling the switching network according to a discharging strategy of the bidirectional power converter; when the current time is in the preset discharging period of the energy storage device and the SOC of the energy storage device meets the discharging condition, control the bidirectional power converter to simulate power generating characteristics of the photovoltaic string, and output a power through the photovoltaic inverter according to the discharging strategy of the energy storage device.

According to an embodiment of the disclosure, the switching network includes a diode, a first switch, and a second switch. An anode of the diode is connected to a first output terminal of the photovoltaic string. One end of the first switch is connected to a cathode of the diode and a first input terminal of the photovoltaic inverter, and other end of the first switch is connected to a first input terminal of the bidirectional power converter. One end of the second switch is connected to a second output terminal of the photovoltaic string and a second input terminal of the photovoltaic inverter, and other end of the second switch is connected to a second input terminal of the bidirectional power converter.

A third aspect of the disclosure provides a non-transitory computer-readable storage medium storing a computer program and implementing the control method of the photovoltaic system according to the first aspect of the disclosure when the program is executed by a processor.

Beneficial effects of the disclosure are as follows.

The disclosure can directly implement the charging/discharging control of the energy storage device without the need for a related apparatus to sample or communicate with a grid-connected end of the photovoltaic system, which is low in cost and simple in control. Moreover, since there is no information exchange with another apparatus, a third-party photovoltaic inverter apparatus can be better matched, and compatibility is strong.

### BRIEF DESCRIPTION OF THE DRAWINGS

FIG. 1 is a flowchart of a control method of a photovoltaic system according to the first embodiment of the disclosure.
FIG. 2 is a schematic structural diagram of a photovoltaic system according to the first embodiment of the disclosure.
FIG. 3 is a flowchart of a control method of a photovoltaic system according to the second embodiment of the disclosure.
FIG. 4 is a flowchart of a control method of a photovoltaic system according to the third embodiment of the disclosure.
FIG. 5 is a schematic structural diagram of a photovoltaic system according to the second embodiment of the disclosure.
FIG. 6 is a schematic structural diagram of a photovoltaic system according to the third embodiment of the disclosure.
FIG. 7 is a schematic structural diagram of a photovoltaic system according to the fourth embodiment of the disclosure.
FIG. 8 is a schematic block diagram of a control device of a photovoltaic system according to an embodiment of the disclosure.

### DESCRIPTION OF THE EMBODIMENTS

The technical solutions in the embodiments of the disclosure will be clearly and completely described below in conjunction with the drawings in the embodiments of the disclosure. Obviously, the described embodiments are only part of the embodiments of the disclosure, rather than all the embodiments. Based on the embodiments of the disclosure, all other embodiments obtained by persons skilled in the art without making any creative work shall fall within the protection scope of the disclosure.

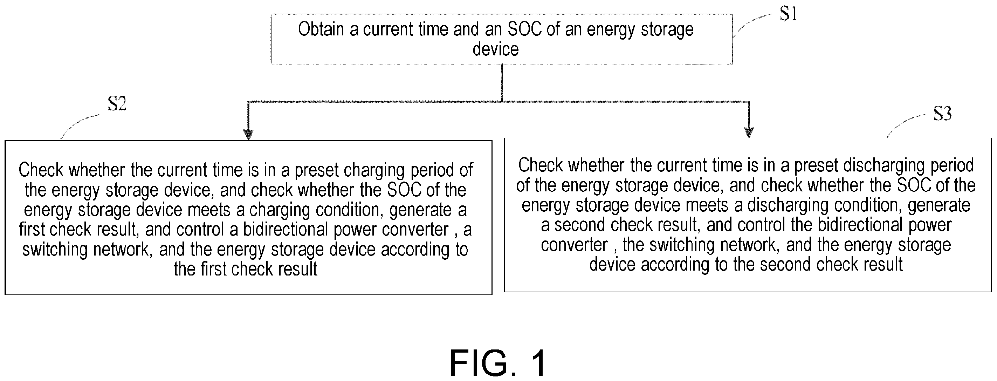

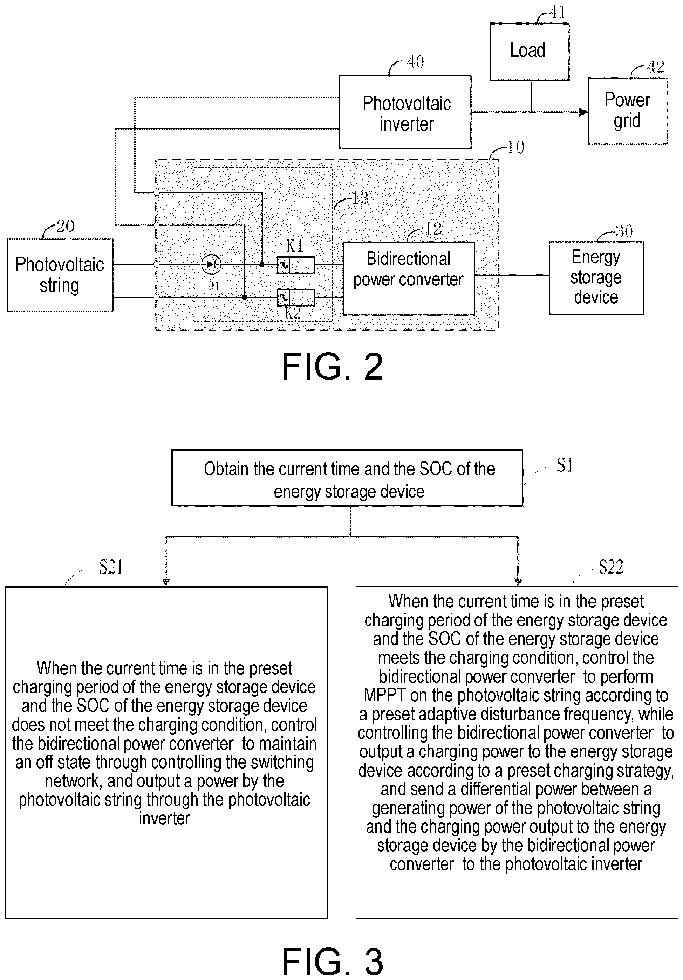

FIG. 1 is a flowchart of a control method of a photovoltaic system according to a first embodiment of the disclosure. FIG. 2 is a schematic structural diagram of a photovoltaic system according to the first embodiment of the disclosure.

As shown in FIG. 2, the photovoltaic system includes a photovoltaic string 20, an energy storage device 30, a photovoltaic inverter 40, and a power converter 10 connected to the photovoltaic string 20, the energy storage device 30, and the photovoltaic inverter 40. The power converter 10 includes a switching network 13 and a bidirectional power converter 12. As shown in FIG. 1, the control method based on the photovoltaic system shown in FIG. 2 includes the following steps.

In S 1, a current time and an state of charge (SOC) of the energy storage device are obtained.

In S2, whether the current time is in a preset charging period of the energy storage device is checked, and whether the SOC of the energy storage device meets a charging condition is checked, a first check result is generated, and the bidirectional power converter, the switching network, and the energy storage device are controlled according to the first check result.

In S3, whether the current time is in a preset discharging period of the energy storage device is checked, and whether the SOC of the energy storage device meets a discharging condition is checked, a second check result is generated, and the bidirectional power converter, the switching network, and the energy storage device are controlled according to the second check result.

Specifically, the control method provided by the disclosure may be applied to a household photovoltaic system, and the switching network 13 may control whether the energy storage device 30 is connected to the photovoltaic system and ensure that an output power of the energy storage device 30 does not flow back to the photovoltaic string 20 when discharging. The bidirectional power converter 12 may bidirectionally operate and may be any bidirectional direct current conversion (DC/DC) circuit, which may input an output power of the photovoltaic string 20 into the energy storage device 30 or may also input an output power of the energy storage device 30 into the photovoltaic inverter 40 to be supplied to a load 41 or input into a power grid 42. The control method of the disclosure can directly implement the charging/discharging control of the energy storage device without the need for a related apparatus to sample or communicate with a grid-connected end of the photovoltaic system, which is low in cost and simple in control. Moreover, since there is no information exchange with another apparatus, a third-party photovoltaic inverter apparatus can be better matched, and compatibility is strong.

In a specific embodiment of the disclosure, as shown in FIG. 2, the switching network 13 may include a diode D1, a first switch K1, and a second switch K2.

An anode of the diode D 1 is connected to a first output terminal of the photovoltaic string 20. One end of the first switch K1 is connected to a cathode of the diode D1 and a first input terminal of the photovoltaic inverter 40, and the other end of the first switch K1 is connected to a first input terminal of the bidirectional power converter 12. One end of the second switch K2 is connected to a second output terminal of the photovoltaic string 20 and a second input terminal of the photovoltaic inverter 40, and the other end of the second switch K2 is connected to a second input terminal of the bidirectional power converter 12.

Specifically, as shown in FIG. 2, the diode D1 may also be a rectifier bridge stack, which functions to prevent the energy storage device 30 in a discharge state from backflowing current to the photovoltaic string 20 through the power converter 10 when a port voltage of the photovoltaic string 20 drops due to illumination. The first switch K1 and the second switch K2 are active disconnection/conduction apparatuses and may be implemented by relays, contactors, electronic switching, etc., which function to ensure that the energy storage device 30 does not discharge by mistake (for a non-isolated buck/boost circuit) at non-preset discharge time, as long as the function of the disclosure can be achieved. The output power of the photovoltaic string 20 may be directly input into the photovoltaic inverter 40 to be supplied to the power grid 42 or the load 41 or may also be input into the energy storage device 30 through the bidirectional power converter 12. The energy storage device 30 may work in a charging mode or may also work a discharging mode, and input the output power into the photovoltaic inverter 40 through the bidirectional power converter 12 to be supplied to the power grid 42 or the load 41. The switching network 13 may be adapted to any bidirectional direct current conversion (DC/DC) circuit, including an isolated bidirectional direct current power converter or a non-isolated bidirectional direct current power converter.

The following describes how to control the power converter and the energy storage device according to the check result in conjunction with specific embodiments.

According to an embodiment of the disclosure, as shown in FIG. 3, controlling the bidirectional power converter, the switching network, and the energy storage device according to the first check result specifically includes the following.

In S21, when the current time is in the preset charging period of the energy storage device and the SOC of the energy storage device does not meet the charging condition, the bidirectional power converter is controlled to maintain an off state through controlling the switching network to disconnect a charging loop of the energy storage device, and a power is output by the photovoltaic string through the photovoltaic inverter.

For example, if the SOC of the energy storage device is higher than a certain preset threshold, it is checked that the SOC of the energy storage device does not meet the charging condition.

In S22, when the current time is in the preset charging period of the energy storage device and the SOC of the energy storage device meets the charging condition, the bidirectional power converter is controlled to perform MPPT on the photovoltaic string according to a preset adaptive disturbance frequency, while controlling the bidirectional power converter to output a charging power to the energy storage device according to a preset charging strategy, and a differential power between a generating power of the photovoltaic string and the charging power output to the energy storage device by the bidirectional power converter is sent to the photovoltaic inverter.

Specifically, when the current time is in the preset charging period of the energy storage device and the SOC of the energy storage device does not meet the charging condition, the bidirectional power converter 12 is maintained in the off state through controlling K1 and K2 to be disconnected, the bidirectional power converter 12 does not charge the energy storage device 30, and the photovoltaic string 20 normally outputs the power to the power grid 42 or the load 41 through the photovoltaic inverter 40. When the current time is in the preset charging period of the energy storage device and the SOC of the energy storage device meets the charging condition, K1 and K2 are controlled to be closed, and the bidirectional power converter 12 is controlled to perform MPPT on the photovoltaic string 20 according to the preset adaptive disturbance frequency, while controlling the bidirectional power converter 12 to output the charging power to the energy storage device 30 according to the preset charging strategy. At the same time, the differential power between the generating power of the photovoltaic string and the charging power output to the energy storage device by the bidirectional power converter is sent to the photovoltaic inverter 40 to send the differential power to the power grid 42 or the load 41, so that the surplus electricity of the photovoltaic string may be output through the photovoltaic inverter to fully utilize the efficacy of a photovoltaic generating string. When the output power of the photovoltaic string 20 is insufficient, the bidirectional power converter 12 may quickly adjust an MPPT state through real-time voltage sampling.

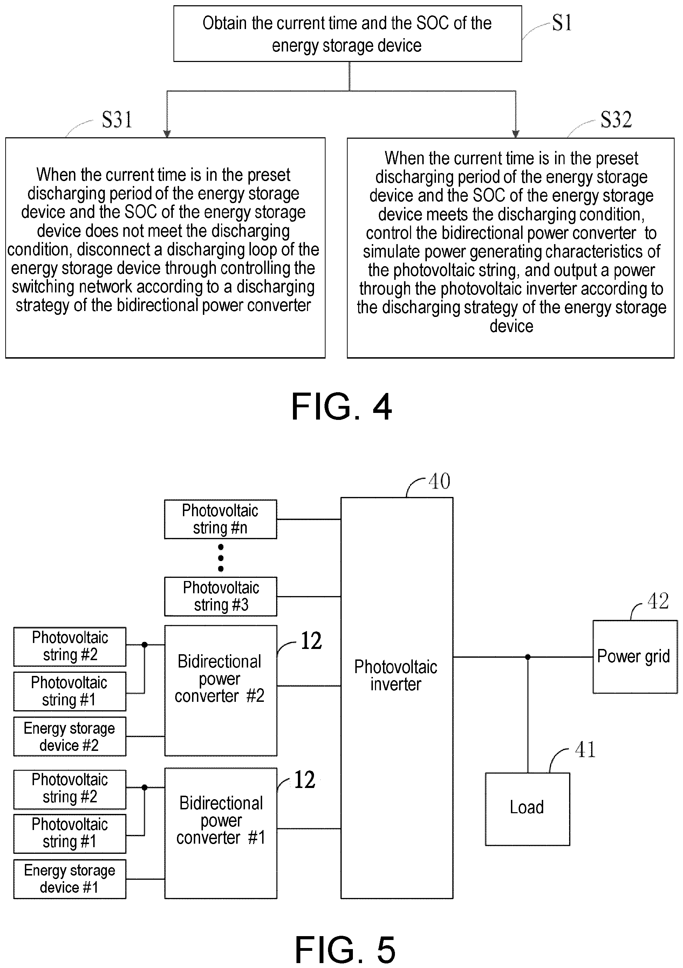

According to an embodiment of the disclosure, as shown in FIG. 4, controlling the bidirectional power converter, the switching network, and the energy storage device according to the second check result specifically includes the following.

In S31, when the current time is in the preset discharging period of the energy storage device and the SOC of the energy storage device does not meet the discharging condition, a discharging loop of the energy storage device is disconnected through controlling the switching network according to a discharging strategy of the bidirectional power converter.

In S32, when the current time is in the preset discharging period of the energy storage device and the SOC of the energy storage device meets the discharging condition, the bidirectional power converter is controlled to simulate power generating characteristics of the photovoltaic string, and a power is output through the photovoltaic inverter according to the discharging strategy of the energy storage device.

Specifically, when the current time is in the preset discharging period of the energy storage device, if the SOC stored in the energy storage device 30 meets the discharging condition, the switches K1 and K2 are controlled to be conducted, and the bidirectional power converter 12 is controlled to work with photovoltaic generating characteristics, that is, current-voltage (IV) characteristics. The energy storage device 30 discharges, electricity passes through the bidirectional power converter 12 and enters the photovoltaic inverter 40. At the same time, if the photovoltaic string 20 may still generate electricity at this time, the generating power also passes through the bidirectional power converter 12 and enters the photovoltaic inverter 40, and the photovoltaic inverter 40 inverts the output power to the load 41 and the power grid 42. When the current time is in the preset discharging period of the energy storage device, if the SOC stored in the energy storage device 30 does not meet the discharging condition, the switches K1 and K2 are controlled to be disconnected, and the discharging loop of the energy storage device 30 is disconnected. The energy storage device 30 cannot release power. If the photovoltaic string 20 may still generate electricity at this time, the output power is output to the photovoltaic inverter 40 via the bidirectional power converter 12, and the photovoltaic inverter 40 inverts the output power to the load 41 and the power grid 42. If the photovoltaic string 20 cannot generate electricity, the system cannot output power to the load 41 at this time, and the load 41 is provided with power by the power grid 42.

Therefore, the disclosure can directly implement the charging/discharging control of the energy storage device without the need for a related apparatus to sample or communicate with the grid-connected end of the photovoltaic system, which is low in cost and simple in control. Moreover, since there is no information exchange with another apparatus, the third-party photovoltaic inverter apparatus can be better matched, and compatibility is strong.

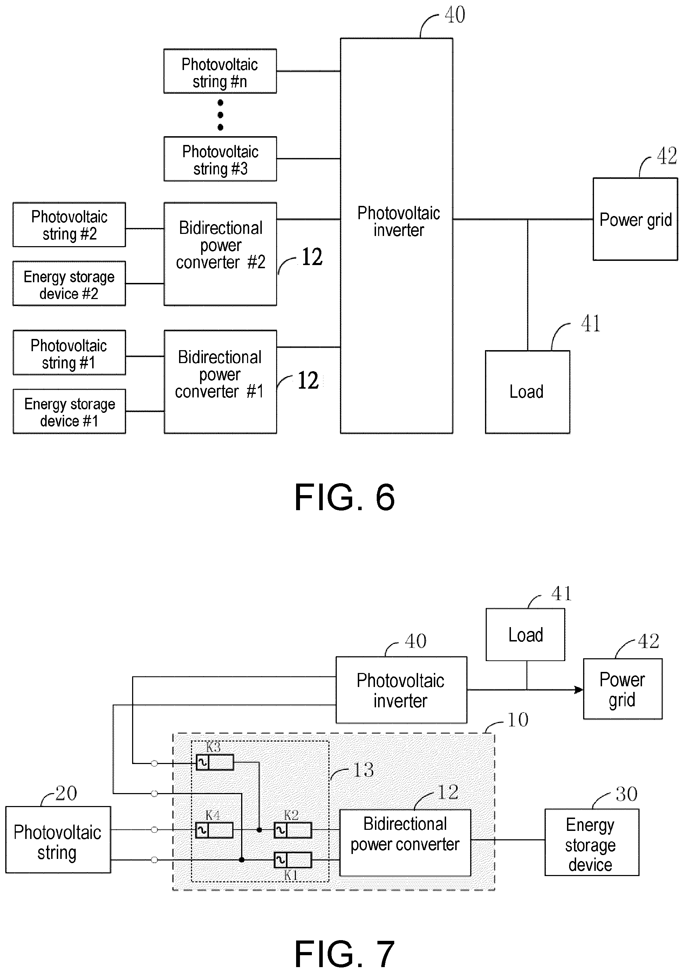

In the disclosure, the photovoltaic string 20 may be one or may also be more, depending on the actual situation. When there is one photovoltaic string 20, the structure of the photovoltaic system may be as shown in FIG. 2. When there are multiple photovoltaic strings 20, the structure of the photovoltaic system may be as shown in FIG. 5 and FIG. 6.

The structure of the switching network 13 may also be as shown in FIG. 7. As shown in FIG. 7, the switching network 13 includes first to fourth switches K1 to K4, wherein K1 is connected between the second output terminal of the photovoltaic string 20 and the second input terminal of the bidirectional power converter 12, K2 and K4 are connected in series and then connected between the first input terminal of the bidirectional power converter 12, and there is a first connection point between K2 and K4. One end of K3 is connected to the first connection point, the other end of K3 is connected to the first input terminal of the photovoltaic inverter 40, and one end of K1 is also connected to the second input terminal of the photovoltaic inverter.

Specifically, based on the photovoltaic system shown in FIG. 7, K1 and K2 are active disconnection/conduction apparatuses and may be implemented by devices such as relays, contactors, and electronic switches. In the preset charging period of the energy storage device 30, if the SOC stored in the energy storage device 30 meets the charging condition, the switches K1, K2, and K4 are controlled to be conducted, and K3 is disconnected. The output power of the photovoltaic string 20 enters the bidirectional power converter 12, and the bidirectional power converter 12 tracks an MPPT curve of the photovoltaic string 20 and charges the energy storage device 30. In the preset charging period of the energy storage device 30, if the SOC stored in the energy storage device 30 does not meet the charging condition, the switches K3 and K4 are controlled to be conducted, and K1 and K2 are disconnected. The generating power of the photovoltaic string 20 enters the photovoltaic inverter 40 and is output to the load 41 and the power grid 42. In the preset discharging period of the energy storage device 30, if the SOC stored in the energy storage device 30 meets the discharging condition, the switches K1, K2, and K3 are controlled to be conducted, and K4 is disconnected. The energy storage device 30 outputs the power to the photovoltaic inverter 40 through the bidirectional power converter 12, and the photovoltaic inverter outputs the power to the load 41 and the power grid 42. At this time, the bidirectional power converter 12 works in a photovoltaic I-V curve mode. In the preset discharging period of the energy storage device 30, if the SOC stored in the energy storage device 30 does not meet the discharging condition, the switches K1 and K2 are controlled to be disconnected, and K4 and K2 are conducted. The energy storage device 30 does not discharge.

The control function of the photovoltaic system of the disclosure may be implemented by adopting a controller, and the controller may be disposed in the power converter 10.

In summary, in the control method of the photovoltaic system according to an embodiment of the disclosure, the charging/discharging control of the energy storage device can be directly implemented without the need for a related apparatus to sample or communicate with the grid-connected end of the photovoltaic system, which is low in cost and simple in control. Moreover, since there is no information exchange with another apparatus, the third-party photovoltaic inverter apparatus can be better matched, and compatibility is strong. Moreover, the surplus electricity of the photovoltaic string may be output through the photovoltaic inverter to fully utilize the efficacy of a photovoltaic generating apparatus.

Corresponding to the control method of the photovoltaic system, the disclosure also provides a control device of the photovoltaic system.

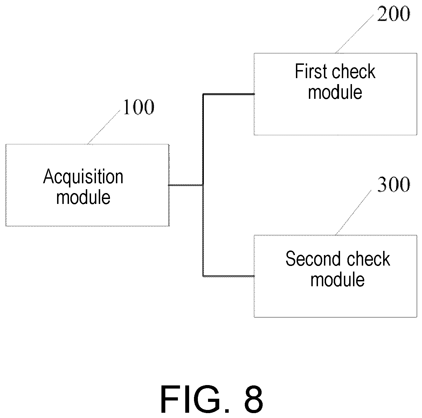

As shown in FIG. 2, there are the photovoltaic string 20, the energy storage device 30, the photovoltaic inverter 40, and the power converter 10 connected to the photovoltaic string 20, the energy storage device 30, and the photovoltaic inverter 40. The power converter 10 includes the switching network 13 and the bidirectional power converter 12. As shown in FIG. 8, the control device includes an acquisition module 100, a first check module 200, and a second check module 300.

The acquisition module 100 is used to obtain the current time and the SOC of the energy storage device. The first check module 200 is used to determine whether the current time is in the preset charging period of the energy storage device, and determine whether the SOC of the energy storage device meets the charging condition, generate the first check result, and control the bidirectional power converter, the switching network, and the energy storage device according to the first check result. The second check module 300 is used to determine whether the current time is in the preset discharging period of the energy storage device, and whether the SOC of the energy storage device meets the discharging condition, generate the second check result, and control the bidirectional power converter, the switching network, and the energy storage device according to the second check result.

According to an embodiment of the disclosure, the first check module 200 is specifically used to: when the current time is in the preset charging period of the energy storage device and the SOC of the energy storage device does not meet the charging condition, control the bidirectional power converter to maintain the off state through controlling the switching network to disconnect the charging loop of the energy storage device, and output the power by the photovoltaic string through the photovoltaic inverter; when the current time is in the preset charging period of the energy storage device and the SOC of the energy storage device meets the charging condition, control the bidirectional power converter to perform MPPT on the photovoltaic string according to the preset adaptive disturbance frequency, while controlling the bidirectional power converter to output the charging power to the energy storage device according to the preset charging strategy, and send the differential power between the generating power of the photovoltaic string and the charging power output to the energy storage device by the bidirectional power converter to the photovoltaic inverter.

According to an embodiment of the disclosure, the second check module 300 is specifically used to: when the current time is in the preset discharging period of the energy storage device and the SOC of the energy storage device does not meet the discharging condition, disconnect the discharging loop of the energy storage device through controlling the switching network according to the discharging strategy of the bidirectional power converter; when the current time is in the preset discharging period of the energy storage device and the SOC of the energy storage device meets the discharging condition, control the bidirectional power converter to simulate the power generating characteristics of the photovoltaic string, and output the power through the photovoltaic inverter according to the discharging strategy of the energy storage device.

According to an embodiment of the disclosure, in a specific embodiment of the disclosure, as shown in FIG. 2, the switching network 13 may include the diode D1, the first switch K1, and the second switch K2.

The anode of the diode D1 is connected to the first output terminal of the photovoltaic string 20. One end of the first switch K1 is connected to the cathode of the diode D1 and the first input terminal of the photovoltaic inverter 40, and the other end of the first switch K1 is connected to the first input terminal of the bidirectional power converter 12. One end of the second switch K2 is connected to the second output terminal of the photovoltaic string 20 and the second input terminal of the photovoltaic inverter 40, and the other end of the second switch K2 is connected to the second input terminal of the bidirectional power converter 12.

In the control device of the photovoltaic system according to an embodiment of the disclosure, the charging/discharging control of the energy storage device can be directly implemented without the need for a related apparatus to sample or communicate with the grid-connected end of the photovoltaic system, which is low in cost and simple in control. Moreover, since there is no information exchange with another apparatus, the third-party photovoltaic inverter apparatus can be better matched, and compatibility is strong. Moreover, the surplus electricity of the photovoltaic string may be output through the photovoltaic inverter to fully utilize the efficacy of the photovoltaic generating apparatus.

In addition, the disclosure also provides a non-transitory computer-readable storage medium storing a computer program and implementing the control method of the photovoltaic system of the disclosure when the program is executed by a processor.

In the non-transitory computer-readable storage medium according to an embodiment of the disclosure, when the computer program stored thereon is executed by the processor, the charging/discharging control of the energy storage device can be directly implemented without the need for a related apparatus to sample or communicate with the grid-connected end of the photovoltaic system, which is low in cost and simple in control. Moreover, since there is no information exchange with another apparatus, the third-party photovoltaic inverter apparatus can be better matched, and compatibility is strong. Moreover, the surplus electricity of the photovoltaic string may be output through the photovoltaic inverter to fully utilize the efficacy of the photovoltaic generating apparatus.

In the description of the disclosure, the description of any process or method described in the flowcharts or in other ways herein may be understood as representing a module, a segment, or a part of codes including one or more executable commands for implementing a customized logical function or steps of a process, and the scope of the preferred embodiments of the disclosure includes additional implementations. It should be understood by persons skilled in the art that the embodiments of the disclosure may be performed in a different order than shown or discussed, including executing functions in a substantially simultaneous manner or in a reverse order, depending on the functions involved.

Although the embodiments of the disclosure have been shown and described, it will be understood by persons skilled in the art that various changes, modifications, substitutions, and variations may be made to the embodiments without departing from the principle and spirit of the disclosure, and that the scope of the disclosure is defined by the appended claims and their equivalents.

## Claims

1. A control method of a photovoltaic system, **characterized in that** the photovoltaic system comprises a photovoltaic string (20), an energy storage device (30), a photovoltaic inverter (40), and a power converter (10) connected to the photovoltaic string (20), the energy storage device (30), and the photovoltaic inverter (40), wherein the power converter (10) comprises a switching network (13) and a bidirectional power converter (12), the control method comprising:
obtaining the current time and the state of charge (SOC) of the energy storage device (30);
checking whether the current time is in a preset charging period of the energy storage device (30), and checking whether the SOC of the energy storage device (30) meets a charging condition, generating a first check result, and controlling the bidirectional power converter (12), the switching network (13), and the energy storage device (30) according to the first check result;
checking whether the current time is in a preset discharging period of the energy storage device (30), and checking whether the SOC of the energy storage device (30) meets a discharging condition, generating a second check result, and controlling the bidirectional power converter (12), the switching network (13), and the energy storage device (30) according to the second check result.

2. The control method of the photovoltaic system according to claim 1, **characterized in that** controlling the bidirectional power converter (12), the switching network (13), and the energy storage device (30) according to the first check result specifically comprises:
when the current time is in the preset charging period of the energy storage device (30) and the SOC of the energy storage device (30) does not meet the charging condition, controlling the bidirectional power converter (12) to maintain an off state through controlling the switching network (13) to disconnect the energy storage device (30), and outputting a power by the photovoltaic string (20) through the photovoltaic inverter (40);
when the current time is in the preset charging period of the energy storage device (30) and the SOC of the energy storage device (30) meets the charging condition, controlling the bidirectional power converter (12) to perform maximum power point tracking (MPPT) on the photovoltaic string (20) according to a preset adaptive disturbance frequency, while controlling the bidirectional power converter (12) to output a charging power to the energy storage device (30) according to a preset charging strategy.

3. The control method of the photovoltaic system according to claim 2, **characterized in that** controlling the power converter (10) and the energy storage device (30) according to the first check result further comprises:
sending a differential power between a generating power of the photovoltaic string (20) and the charging power output to the energy storage device (30) by the bidirectional power converter (12) to the photovoltaic inverter (40).

4. The control method of the photovoltaic system according to claim 1, **characterized in that** controlling the bidirectional power converter (12), the switching network (13), and the energy storage device (30) according to the second check result specifically comprises:
when the current time is in the preset discharging period of the energy storage device (30) and the SOC of the energy storage device (30) does not meet the discharging condition, disconnecting the energy storage device (30) through controlling the switching network (13) according to a discharging strategy of the bidirectional power converter (12);
when the current time is in the preset discharging period of the energy storage device (30) and the SOC of the energy storage device (30) meets the discharging condition, controlling the bidirectional power converter (12) to simulate power generating characteristics of the photovoltaic string (20), and outputting a power through the photovoltaic inverter (40) according to the discharging strategy of the energy storage device (30).

5. The control method of the photovoltaic system according to claim 1, **characterized in that** the switching network (13) comprises:
a diode (D1), wherein an anode of the diode (D 1) is connected to a first output terminal of the photovoltaic string (20);
a first switch (K1), wherein one end of the first switch (K1) is connected to a cathode of the diode (D1) and a first input terminal of the photovoltaic inverter (40), and other end of the first switch (K1) is connected to a first input terminal of the bidirectional power converter (12);
a second switch (K2), wherein one end of the second switch (K2) is connected to a second output terminal of the photovoltaic string (20) and a second input terminal of the photovoltaic inverter (40), and other end of the second switch (K2) is connected to a second input terminal of the bidirectional power converter (12).

6. A control device of a photovoltaic system, **characterized in that** the photovoltaic system comprises a photovoltaic string (20), an energy storage device (30), a photovoltaic inverter (40), and a power converter (10) connected to the photovoltaic string (20), the energy storage device (30), and the photovoltaic inverter (40), wherein the power converter (10) comprises a switching network (13) and a bidirectional power converter (12), the control device comprising:
an acquisition module (100), used to obtain a current time and an SOC of the energy storage device (30);
a first check module (200), used to determine whether the current time is in a preset charging period of the energy storage device (30), and determine whether the SOC of the energy storage device (30) meets a charging condition, generate a first check result, and control the bidirectional power converter (12), the switching network (13), and the energy storage device (30) according to the first check result;
a second check module (300), used to determine whether the current time is in a preset discharging period of the energy storage device (30), and determine whether the SOC of the energy storage device (30) meets a discharging condition, generate a second check result, and control the bidirectional power converter (12), the switching network (13), and the energy storage device (30) according to the second check result.

7. The control device of the photovoltaic system according to claim 6, **characterized in that** the first check module (100) is specifically used to:
when the current time is in the preset charging period of the energy storage device (30) and the SOC of the energy storage device (30) does not meet the charging condition, control the bidirectional power converter (12) to maintain an off state through controlling the switching network (13) to disconnect a charging loop of the energy storage device (30), and output a power by the photovoltaic string (20) through the photovoltaic inverter (40);
when the current time is in the preset charging period of the energy storage device (30) and the SOC of the energy storage device (30) meets the charging condition, control the bidirectional power converter (12) to perform MPPT on the photovoltaic string (20) according to a preset adaptive disturbance frequency, while controlling the bidirectional power converter (12) to output a charging power to the energy storage device (30) according to a preset charging strategy.

8. The control device of the photovoltaic system according to claim 7, **characterized in that** the first check module (100) is further used to: send a differential power between a generating power of the photovoltaic string (20) and the charging power output to the energy storage device (30) by the bidirectional power converter (12) to the photovoltaic inverter (40).

9. The control device of the photovoltaic system according to claim 6, **characterized in that** the second check module (300) is specifically used to:
when the current time is in the preset discharging period of the energy storage device (30) and the SOC of the energy storage device (30) does not meet the discharging condition, disconnect a discharging loop of the energy storage device (30) through controlling the switching network (13) according to a discharging strategy of the bidirectional power converter (12);
when the current time is in the preset discharging period of the energy storage device (30) and the SOC of the energy storage device (30) meets the discharging condition, control the bidirectional power converter (12) to simulate power generating characteristics of the photovoltaic string (20), and output a power through the photovoltaic inverter (40) according to the discharging strategy of the energy storage device (30).

10. The control device of the photovoltaic system according to claim 6, **characterized in that** the switching network (13) comprises:
a diode (D1), wherein an anode of the diode (D1) is connected to a first output terminal of the photovoltaic string (20);
a first switch (K1), wherein one end of the first switch (K1) is connected to a cathode of the diode (D1) and a first input terminal of the photovoltaic inverter (40), and other end of the first switch (K1) is connected to a first input terminal of the bidirectional power converter (12);
a second switch (K2), wherein one end of the second switch (K2) is connected to a second output terminal of the photovoltaic string (20) and a second input terminal of the photovoltaic inverter (40), and other end of the second switch (K2) is connected to a second input terminal of the bidirectional power converter (12).
